# EUROPEAN PATENT APPLICATION

(11) **EP 4 410 743 A1**
(43) Date of publication of application: **07.08.2024**
(21) Application number: 22875109.5
(22) Date of filing: 29.09.2022
(51) Int. Cl.: C01D 15/08, B01J 20/08, H01M 10/54

(54) **METHOD FOR RECOVERING LITHIUM FROM LITHIUM-CONTAINING SOLUTION**

(30) Priority: 30.09.2021 CN 202111163658
(71) Applicant: BYD Company Limited, Shenzhen, Guangdong 518118 (CN)
(72) Inventor: WANG, Minghao, Shenzhen, Guangdong 518118 (CN); LIAN, Junlan, Shenzhen, Guangdong 518118 (CN); LIN, Hongye, Shenzhen, Guangdong 518118 (CN)
(74) Representative: Gulde & Partner
(86) International application number: PCT/CN2022/122766
(87) International publication number: WO 2023/051728

(57) **Abstract**

A method for recovering lithium from a lithium-containing solution is provided. A lithium-containing solution with an adjusted pH value or an unadjusted pH value is mixed with a meta-aluminate solution, and the pH value is adjusted to weak acid/neutral, so that lithium can be separated from the lithium-containing solution in the form of a precipitate of LiₐX·2Al(OH)₃·nH₂O. Then, the precipitate is converted into a lithium adsorbent of (1-m)LiₐX·2Al(OH)₃·nH₂O and a LiₐX-containing filtrate through desorption of lithium. High-purity Li₂CO₃ is obtained by performing lithium precipitation on the LiₐX-containing filtrate.

## Description

### CROSS-REFERENCE TO RELATED APPLICATIONS

This application claims priority to and benefits of Chinese Patent Application No. 202111163658.0, filed with China National Intellectual Property Administration on September 30, 2021 and entitled "METHOD FOR RECOVERING LITHIUM FROM LITHIUM-CONTAINING SOLUTION". The entire content of the above-referenced application is incorporated herein by reference.

### FIELD

The present disclosure relates to the field of environmental protection and resource recycling, and specifically, to a method for recovering lithium from a lithium-containing solution.

### BACKGROUND

Lithium carbonate is a basic material for preparing various industrial lithium salts. However, in the preparation process of lithium carbonate, a lithium-containing solution with a large amount of Li⁺ and a certain amount of Na⁺ and K⁺ remaining will be produced from the lithium carbonate due to a certain water solubility of lithium carbonate. In the related art, a lithium-containing solution is generally spread and sun-dried or strongly evaporated to remove Na⁺ and K⁺ contained therein, and is then adsorbed, desorbed, and concentrated with membrane to recover lithium. The foregoing method for recovering lithium has a long cycle together with poor separation of Na⁺ and K⁺ and a low recovery rate of lithium.

### SUMMARY

To resolve the foregoing technical problem, the present disclosure provides a method for recovering lithium from a lithium-containing solution. In this method, the efficient separation of lithium from impurity ions is realized, and a recyclable lithium adsorbent is prepared while the lithium is recovered, which can realize further recovery of the lithium-containing solution. This method not only has a high recovery rate of lithium from the lithium-containing solution and a high comprehensive recovery rate of resources, but also has a simple process and a low energy consumption, and is environmentally friendly.

The present disclosure provides a method for recovering lithium from a lithium-containing solution, including the following steps:
(1) lithium is precipitated from the lithium-containing solution in step a) or b);
   a) a pH value of the lithium-containing solution is adjusted to 5-6, and the lithium-containing solution is mixed with a meta-aluminate solution, standing for aging, to obtain a precipitation solution containing a first precipitate of Li(OH)·2Al(OH)₃·nH₂O, where n = 1-3; and
      a pH value of the precipitation solution is adjusted to 6-7, and filtering and washing are performed, to obtain a precipitate of LiₐX·2Al(OH)₃·nH₂O and a first filtrate; or
   b) the lithium-containing solution is mixed with the meta-aluminate solution, a pH value of the mixed system is adjusted to 5-7, standing for aging, and filtering and precipitating are performed, to obtain a precipitate of LiₐX·2Al(OH)₃·nH₂O and a first filtrate,
      where X is an anion of an acid solution for adjusting the pH value, and a = 1 or 2;
(2) desorption of lithium: the precipitate of LiₐX·2Al(OH)₃·nH₂O is added to water and stirred for reaction, and filtered to obtain a lithium adsorbent of (1-m)LiₐX·2Al(OH)₃·nH₂O and a LiₐX-containing filtrate, where m = 0.1-0.9; and
(3) lithium precipitation: the LiₐX-containing filtrate is evaporated and concentrated, a carbonate is added and stirred for reaction, and filtering and washing are performed, to obtain a precipitate of Li₂CO₃.

In some implementations, the method further includes: adding the lithium adsorbent to the first filtrate, stirring at 20°C -60°C, to adsorb a lithium ion in the first filtrate, and performing filtering and washing, to obtain a second precipitate containing LiₐX·2Al(OH)₃·nH₂O; and performing the desorption of lithium on the second precipitate to obtain a lithium-desorbed filtrate, and precipitating lithium from the lithium-desorbed filtrate. In some implementations, a solid-liquid ratio of the lithium adsorbent to the first filtrate is 1: (1-30) kg/L.

In some implementations, the performing the desorption of lithium on the second precipitate includes: adding the second precipitate to water and stirring for reaction, and filtering to obtain a second lithium adsorbent of (1-m)LiₐX·2Al(OH)₃·nH₂O and a second LiₐX-containing filtrate.

In some implementations, the method further includes: mixing the second LiₐX-containing filtrate and the LiₐX-containing filtrate, and performing the lithium precipitation in step (3) on the second LiₐX-containing filtrate and the LiₐX-containing filtrate that are mixed together.

In some implementations, the acid solution is one of sulfuric acid, hydrochloric acid, nitric acid or acetic acid.

In some implementations, a particle size D50 of the lithium adsorbent is 20 µm -100 µm.

In some implementations, in the desorption of lithium, the precipitate of LiₐX·2Al(OH)₃·nH₂O is mixed with water in a mass ratio of 1:(1-50), and stirred at 20°C -60°C for 1 h -24 h.

In some implementations, the LiₐX-containing filtrate is evaporated and concentrated until a concentration of lithium is 15 g/L -25 g/L.

In some implementations, in step (3), the carbonate is added to the LiₐX-containing filtrate at 50°C -90°C.

In some implementations, step (1) further includes: during adjusting the pH value, collecting carbon dioxide produced by the lithium-containing solution and injecting the same into an alkaline solution to obtain a carbonate, where the alkaline solution is NaOH or KOH, and the carbonate is Na₂CO₃ or K₂CO₃.

In some implementations, in step (1), the lithium-containing solution is mixed with the meta-aluminate solution in a molar ratio of Li:Al of (1.05-1.3):2.

In some implementations, in step (3), the molar ratio of lithium in the LiₐX-containing filtrate to a carbonate ion in the carbonate is (1.05-1.3):2.

In some implementations, in step (3), a second filtrate is also obtained in addition to the precipitate of Li₂CO₃, and the method further includes: adding the second filtrate to the lithium-containing solution.

In some implementations, the filtering is performed under a negative pressure of 0.04 MPa -0.07 MPa, and a mesh number of a filter medium for the filtering is 300-5000.

The present disclosure provides a method for recovering lithium from a lithium-containing solution. In this method, the pH value of the lithium-containing solution is adjusted and a meta-aluminate is added, to separate lithium from the lithium-containing solution by generation of a precipitate and remove a large amount of carbonate ions present in the lithium-containing solution. Then, the precipitate is filtered out, washed, and lithium-desorbed. A recyclable lithium adsorbent with strong adsorption is obtained while lithium is recovered. In addition, the washing on the precipitate obtained in the steps can remove a large amount of impurity ions such as K⁺ and Na⁺ entrained in the precipitate. Finally, a high-purity Li₂CO₃ product is prepared by adding a carbonate to a lithium-containing filtrate.

In this method, the efficient separation of lithium from impurity ions is realized, and a recyclable lithium adsorbent is prepared while the lithium is recovered, which can realize further recovery of the lithium-containing solution. This method not only has a high recovery rate of lithium from the lithium-containing solution, but also has a simple process, is environmentally friendly, and is convenient for large-scale industrial production.

### BRIEF DESCRIPTION OF THE DRAWINGS

FIG. 1 is a process flowchart of lithium recovery according to Example 1 of the present disclosure; and
FIG. 2 is a process flowchart of lithium recovery according to Example 2 of the present disclosure.

### DETAILED DESCRIPTION

The technical solution of the implementations of the present disclosure is described in detail with multiple examples in the following.

The present disclosure provides a method for recovering lithium from a lithium-containing solution, including the following steps:
(1) lithium is precipitated from the lithium-containing solution in step a) or b);
   a) a pH value of the lithium-containing solution is adjusted to 5-6, and the lithium-containing solution is mixed with a meta-aluminate solution, standing for aging, to obtain a precipitation solution containing a first precipitate of Li(OH)·2Al(OH)₃·nH₂O where n = 1-3; and a pH value of the precipitation solution is adjusted to 6-7, and filtering and washing are performed, to obtain a precipitate of LiₐX·2Al(OH)₃·nH₂O and a first filtrate; or
   b) the lithium-containing solution is mixed with the meta-aluminate solution, a pH value of the mixed system is adjusted to 5-7, standing for aging, and filtering and precipitating are performed, to obtain a precipitate of LiₐX·2Al(OH)₃·nH₂O and a first filtrate, where X is an anion of an acid solution for adjusting the pH value, and a = 1 or 2;
(2) desorption of lithium: the precipitate of LiₐX·2Al(OH)₃·nH₂O is added to water and stirred for reaction, and filtered to obtain a lithium adsorbent of (1-m)LiₐX·2Al(OH)₃·nH₂O and a LiₐX-containing filtrate, where m = 0.1-0.9; and
(3) lithium precipitation: the LiₐX-containing filtrate is evaporated and concentrated, a carbonate is added and stirred for reaction, and filtering and washing are performed, to obtain a precipitate of Li₂CO₃.

In some implementations, the lithium-containing solution is an alkaline solution containing a large amount of Li⁺ and impurity ions such as CO₃²⁻, Na⁺, and K⁺, for example, a lithium precipitation mother liquor produced in the process of extracting lithium from a salt lake.

In step a), the pH value of the lithium-containing solution system is adjusted to 5-6 by adding the acid solution, to react with a carbonate ion in the lithium-containing solution to form carbon dioxide to escape, so as to remove the carbonate ion in the system. It should be noted that, when the pH value of the lithium-containing solution system remains at 5-6 and there are no more bubbles to ensure that no carbonate ions remain in the system, the lithium-containing solution system is mixed with the meta-aluminate solution for aluminum salt precipitation. In this process, Li⁺ in the lithium-containing solution reacts with meta-aluminate to form the precipitate of Li(OH)·2Al(OH)₃·nH₂O, precipitating Li⁺ from the lithium-containing solution.

In some implementations, the foregoing lithium-containing solution is stirred at a stirring rate of 100 rpm -500 rpm. An appropriate stirring rate helps to promote the reaction between the carbonate ion in the lithium-containing solution system and a hydrogen ion in the acid solution.

The pH value of the system is adjusted to 6-7 by adding an acid solution to the precipitation solution containing the first precipitate of Li(OH)·2Al(OH)₃·nH₂O, so that the precipitate of Li(OH)·2Al(OH)₃·nH₂O can be converted into the precipitate of LiₐX·2Al(OH)₃·nH₂O, to perform a subsequent desorption of lithium reaction more efficiently and produce the lithium adsorbent of (1-m)LiₐX·2Al(OH)₃·nH₂O with a stronger adsorption capability. X is an anion of the acid solution for adjusting the pH value, and a = 1 or 2. X and a may be determined according to the type of the acid solution for adjusting the pH value.

In step (1), the acid solution for adjusting the pH value may be one of sulfuric acid, hydrochloric acid, nitric acid or acetic acid. The type of the acid solution is selected according to the type of an anion in the lithium-containing solution. That is, for a chloride-type lithium-containing solution, the acid solution is hydrochloric acid; for a sulfate-type lithium-containing solution, the acid solution is sulfuric acid; for a nitrate-type lithium-containing solution, the acid solution is nitric acid; and for an acetate-type lithium-containing solution, the acid solution is acetic acid. In this way, additional impurity ions can be prevented from being introduced to the system. When the acid solution for adjusting the pH value is hydrochloric acid, X is Cl⁻. When the acid solution is nitric acid, X is NO₃⁻. When the acid solution is acetic acid, X is CH₃COO⁻. In the foregoing three cases, a = 1. When the acid solution is sulfuric acid, X is SO₄²⁻, and a = 2.

In some implementations, the foregoing precipitation solution is stirred at a stirring rate of 100 rpm -300 rpm. In some implementations, the system is further stirred for 0.5-1 h after the pH value is adjusted to 6-7. An appropriate stirring rate and stirring time can promote complete conversion of Li(OH)·2Al(OH)₃·nH₂O.

In step b), the lithium-containing solution is directly mixed with the meta-aluminate solution, and a pH value of the system is adjusted to 5-7 with an acid solution, to directly obtain a precipitate of LiₐX·2Al(OH)₃·nH₂O and a first filtrate. It should be noted that, in the process of preparing the precipitate of LiₐX·2Al(OH)₃·nH₂O in step b), the method of forming carbon dioxide through reaction is also used to remove a carbonate ion in the system. To ensure that no carbonate ions remain in the system, the filtering is performed when there are no more bubbles in the system.

In some implementations, the mixed solution of the meta-aluminate solution and the lithium-containing solution obtained in step b) is stirred at a stirring rate of 100 rpm -500 rpm. An appropriate stirring rate can make reactants react completely.

In some implementations, in both steps a) and b), the system may be sonicated during the reaction between the acid solution and the carbonate ion. Sonication can effectively remove the carbon dioxide bubbles generated by the reaction between the carbonate ion and the acid solution in the foregoing system.

In some implementations, the acid solution for adjusting the pH value of the lithium-containing solution in step a) and the acid solution used in step b) are both formulated with one of a commercially available concentrated hydrochloric acid (37 wt%), a commercially available concentrated sulfuric acid (98 wt%), a commercially available acetic acid (99.5 wt%) or a commercially available concentrated nitric acid (68 wt%) and water in a mass ratio of (1-10): 1; and the acid solution for adjusting the pH value of the precipitation solution in step a) is an acid solution with a concentration of 2 wt%-20 wt%. An acid solution with an appropriate concentration is beneficial for reactants to fully react.

In some implementations, in order to avoid introducing additional impurity ions, the meta-aluminate solution is generally a sodium meta-aluminate solution, a potassium meta-aluminate solution or an ammonium meta-aluminate solution. In some implementations, a mass concentration of the meta-aluminate solution is 4-16 wt%. A meta-aluminate solution with an appropriate concentration helps to ensure the rate of the precipitation reaction of Li⁺.

In some implementations, a meta-aluminate is mixed with water and stirred at 25°C-90°C for dissolution with a stirring rate of 100 rpm-500 rpm and a stirring time of 0.5 h-3 h, until the solution is clear and transparent, so that the meta-aluminate is completely dissolved.

In some implementations, the lithium-containing solution is mixed with the meta-aluminate solution in a molar ratio of Li:Al of (1.05-1.3):2. The mixing of the meta-aluminate solution with the excessive lithium-containing solution can ensure that the meta-aluminate reacts completely and no aluminum remains in the system after the reaction.

In some implementations, there may be three manners for mixing the meta-aluminate solution with the lithium-containing solution, including: 1) adding the lithium-containing solution to the meta-aluminate solution by using a peristaltic pump, 2) adding the meta-aluminate solution to the lithium-containing solution by using a peristaltic pump, or 3) mixing the lithium-containing solution with the meta-aluminate solution in a co-current manner.

In some implementations, in the manner 1), the flow rate of the lithium-containing solution is 20 mL/min-5000 mL/min; in the manner 2), the flow rate of the meta-aluminate solution is 20 mL/min-5000 mL/min; and in the manner 3), the flow rates of the lithium-containing solution and the meta-aluminate solution are both 20 mL/min-5000 mL/min. In practical production, the flow rates of the lithium-containing solution and the meta-aluminate solution may be determined according to concentrations of the meta-aluminate solution and the lithium-containing solution and the molar ratio of Li to Al.

In some implementations, the mixed solution of the lithium-containing solution and the meta-aluminate solution is stirred with a stirring rate of 100 rpm-500 rpm and a stirring time of 0.5 h-1 h, and the acid solution is added to adjust the pH value of the system after the lithium-containing solution and the meta-aluminate solution are completely mixed.

In some implementations, in step (1), a standing for aging time is 1 h-24 h and a standing for aging temperature is 5°C-30°C. The standing for aging is performed for reactants (mainly including Li⁺ and AlO₂⁻) in the foregoing mixed solution to be fully reacted and for a generated suspended solid to be settled, promoting the dissolution of tiny particles and the growth of large particles, so that particle sizes of the precipitate of Li(OH)·2Al(OH)₃·nH₂O obtained in step a) and the precipitate of LiₐX·2Al(OH)₃·nH₂O obtained in step b) are more uniform, to help with the subsequent filtering and washing. An appropriate aging temperature can ensure that the structure of the foregoing precipitates will not be damaged due to desorption of lithium.

In some implementations, step (1) further includes: during adjusting the pH value, collecting carbon dioxide produced by the lithium-containing solution and injecting the same into an alkaline solution to obtain a carbonate, where the alkaline solution is NaOH or KOH, and the carbonate is Na₂CO₃ or K₂CO₃. In this way, resources can be fully used, the comprehensive recovery rate of resources can be improved, and the production cost can be reduced. In addition, the selection of NaOH or KOH avoids introducing additional impurity ions. In some implementations, a concentration of the alkaline solution is 4-15 wt%. An appropriate alkaline solution concentration can ensure the reaction rate of carbon dioxide.

In some implementations, the CO₂ produced in the reaction in step (1) is injected into a buffer storage tank, and the same amount of alkaline solution with an equal concentration is poured into sealed reactors No. 1 and No. 2, and the CO₂ in the buffer storage tank is injected into the sealed reactor No. 1 in a mass ratio of CO₂ to the alkaline solution in the sealed reactor No. 1 of (1.1-1.3):1. When a pressure in the sealed reactor No. 1 remains constant, the solution in the sealed reactor No. 1 is transferred to the sealed reactor No. 2 and stirred for 0.5 h-3 h for reaction at a stirring rate of 100 rpm-500 rpm. Finally, a carbonate solution for lithium precipitation is obtained.

In step (2), the precipitate of LiₐX·2Al(OH)₃·nH₂O is mixed with water to partially desorb lithium from LiₐX·2Al(OH)₃·nH₂O, and to prepare the lithium adsorbent of (1-m)LiₐX·2Al(OH)₃·nH₂O with a better lithium adsorption capability and the LiₐX-containing filtrate for preparing lithium carbonate in the subsequent step. The reaction for desorption of lithium is as follows:

LiₐX·2Al(OH)₃·nH₂O ↔ (1-m)LiₐX·2Al(OH)₃·nH₂O + mLiₐX, (m = 0.1-0.9). The reverse reaction of the foregoing reaction is the adsorption of lithium by the lithium adsorbent.

In some implementations, the precipitate of LiₐX·2Al(OH)₃·nH₂O is mixed with water in a mass ratio of 1:(1-50), and stirred at 20°C-60°C for 1 h-24 h. The control of the temperature and reaction time promotes the foregoing reaction to carry out rightward, to improve the yield of the lithium adsorbent and the LiₐX-containing filtrate. The adsorption and recovery of lithium through the route described in the foregoing reaction can improve the efficiency of the adsorption and subsequent desorption of lithium, thereby increasing the recovery rate of lithium.

In the present disclosure, it is only necessary to introduce meta-aluminate into the lithium-containing solution and adjust the pH value to synchronously obtain the recyclable lithium adsorbent (1-m)LiₐX·2Al(OH)₃·nH₂O during the recovery of lithium. The preparation is simple in process and low in cost.

In some implementations, for the lithium adsorbent (1-m)LiₐX·2Al(OH)₃·nH₂O, a D50 particle size is 20 µm-100 µm and a particle size range is 5 µm-300 µm. An appropriate particle size can ensure the adsorption efficiency of the lithium adsorbent.

In step (3), in order to achieve the precipitation of lithium, the LiₐX-containing filtrate is evaporated and concentrated, a carbonate is added and stirred for reaction to convert the lithium into the precipitate of lithium carbonate, and the precipitate of lithium carbonate is filtered out and washed to obtain the precipitate of Li₂CO₃. Step (3) further includes drying the precipitate of Li₂CO₃ with a drying temperature of 90°C-150°C and a drying time of 2 h-3 h.

In some implementations, the LiₐX-containing filtrate is evaporated and concentrated until a concentration of lithium is 15 g/L-25 g/L. The evaporation and concentration of the LiₐX-containing filtrate increases the concentration of Li⁺ in the solution, which is beneficial for the subsequent lithium precipitation reaction and the precipitation of Li₂CO₃, and helps the subsequent filtering process easier to carry out.

In some implementations, the carbonate is added to the LiₐX-containing filtrate at 50°C-90°C with stirring at the same time. In some implementations, the rate of the stirring is 100 rpm-500 rpm, the stirring is further performed for 0.5 h-1 h after the carbonate is added completely, and standing is performed for 1 h-5 h, to ensure that Li⁺ completely reacts. Lithium carbonate is slightly soluble in water, and the solubility of lithium carbonate in water decreases with the increase of the temperature. Therefore, the temperature of the system needs to be kept at 50-90°C, to help lithium carbonate to be precipitated from the solution, thereby increasing the amount of lithium involved in the reaction in the system.

In some implementations, the molar ratio of Li in the LiₐX-containing filtrate to the carbonate ion in the carbonate is (1.05-1.3):2. The carbonate solution is a sodium carbonate solution or potassium carbonate solution with a concentration of 5-20 wt%. The addition of the excessive carbonate can ensure the degree of lithium ion involved in the reaction in the system, thereby ensuring the recovery rate of lithium from the LiₐX-containing filtrate.

In some implementations, step (2) further includes the following steps:
c) balance lithium adsorption: the lithium adsorbent (1 -m)LiₐX·2Al(OH)₃·nH₂O is added to the first filtrate, stirred at 20-60°C, to adsorb a lithium ion in the first filtrate, and filtering and washing are performed, to obtain a second precipitate of LiₐX·2Al(OH)₃·nH₂O;
d) desorption of lithium: the second precipitate is added to water and stirred for reaction, and filtered to obtain a second lithium adsorbent of (1-m)LiₐX·2Al(OH)₃·nH₂O and a lithium-desorbed filtrate (that is, a second LiₐX-containing filtrate); and
e) lithium precipitation: the lithium-desorbed filtrate is evaporated and concentrated, a carbonate is added and stirred for reaction, and filtering and washing are performed, to obtain a precipitate of Li₂CO₃.

In some implementations, in the process of balance lithium adsorption in step c), the solid-liquid ratio of the added lithium adsorbent to the first filtrate is 1:(1-30) kg/L. An appropriate amount of the lithium adsorbent ensures the adsorption rate of the balance lithium remaining in the first filtrate. The recovery rate of lithium from the lithium-containing solution can be significantly increased by the balance lithium adsorption in step c).

Parameters of the desorption of lithium in step d) may be shared with the parameter range defined by the desorption of lithium in step (2), and parameters of the lithium precipitation in step e) may be shared with the parameter range defined by the lithium precipitation in step (3).

In some implementations, the second LiₐX-containing filtrate obtained in step d) and the LiₐX-containing filtrate obtained by the desorption of lithium in step (2) may also be mixed to undergo the evaporation and concentration in step (3) together, a carbonate is added at 50-90°C and stirred for reaction, and filtering and washing are performed, to obtain the precipitate of Li₂CO₃. In some cases, for example, in a case that no new LiₐX-containing filtrates are produced later, the production cost can be reduced and the duration can be shortened by combining the two obtained LiₐX-containing filtrates for evaporation and concentration.

In addition, the lithium adsorbent and the second lithium adsorbent obtained in the foregoing steps may either be directly used for the balance lithium adsorption in the technical process provided in the present disclosure or be partially used for other lithium recovering scenarios after drying, for example, a brine adsorption process at the front stage of a process of lithium extraction from a salt lake. A heating and drying temperature is 70-90°C and a heating and drying time is 2-3 h. In some implementations, the dried lithium adsorbent may be ground or air-crushed, to eliminate powder agglomeration and make lithium adsorbent particles finer and more uniform, thereby ensuring the adsorption efficiency of the lithium adsorbent in the process of brine adsorption.

In some implementations, steps (1), (2), and (3) all include filtering and washing, where in the washing, the obtained precipitate is spray-washed with pure water with a ratio of a water spraying amount per unit time to the precipitate of (0.1-1): 1 L/kg. An appropriate amount of water can effectively remove impurity ions such as Na⁺ and K⁺ in the precipitate, and will not cause the desorption of lithium from the precipitate, which ensures the recovery rate of lithium.

In some implementations, in the filtering in steps (1), (2), and (3), the filtering is performed under a negative pressure of 0.04 MPa-0.07 MPa, and a mesh number of a filter medium for the filtering is 300-5000. A filter medium with an appropriate mesh number and an appropriate negative pressure can avoid the loss of some tiny particles during filtering, thereby ensuring the recovery rate of lithium.

In some implementations, the filtering further includes secondary filtering, where the secondary filtering is carried out by using a precision bag filter with a precision of 3 µm-5 µm. In this way, the loss of tiny particles caused by a filter medium with a small mesh number which is likely to allow some tiny particles to enter the filtrate can be avoided. The tiny particles obtained after the secondary filtering are returned to undergo standing for aging. The secondary filtering can avoid the loss of tiny particles, thereby further increasing the recovery rate of lithium.

In some implementations, in step (3), a second filtrate is also obtained in addition to Li₂CO₃. Step (3) further includes: adding the second filtrate to the lithium-containing solution in step (1). Lithium remaining in the second filtrate can be recovered by the foregoing operation, which further increases the recovery rate of lithium.

The present disclosure provides a method for recovering lithium from a lithium-containing solution. In this method, the pH value of the lithium-containing solution is adjusted and a meta-aluminate is added, to separate lithium from the lithium-containing solution by generation of a precipitate and remove a large amount of carbonate ions present in the lithium-containing solution. Then, the precipitate is filtered out, washed, and lithium-desorbed. A recyclable lithium adsorbent with strong adsorption is obtained while lithium is recovered. In addition, the washing on the precipitate obtained in the steps can remove a large amount of impurity ions such as K⁺ and Na⁺ entrained in the precipitate. Finally, a high-purity Li₂CO₃ product is prepared by adding a carbonate to a lithium-containing filtrate. In this method, the efficient separation of lithium from impurity ions is realized, and a recyclable lithium adsorbent is prepared while the lithium is recovered, which can realize further recovery of the lithium-containing solution. This method not only has a high recovery rate of lithium from the lithium-containing solution, but also has a simple process, is environmentally friendly, and is convenient for large-scale industrial production.

### Example 1

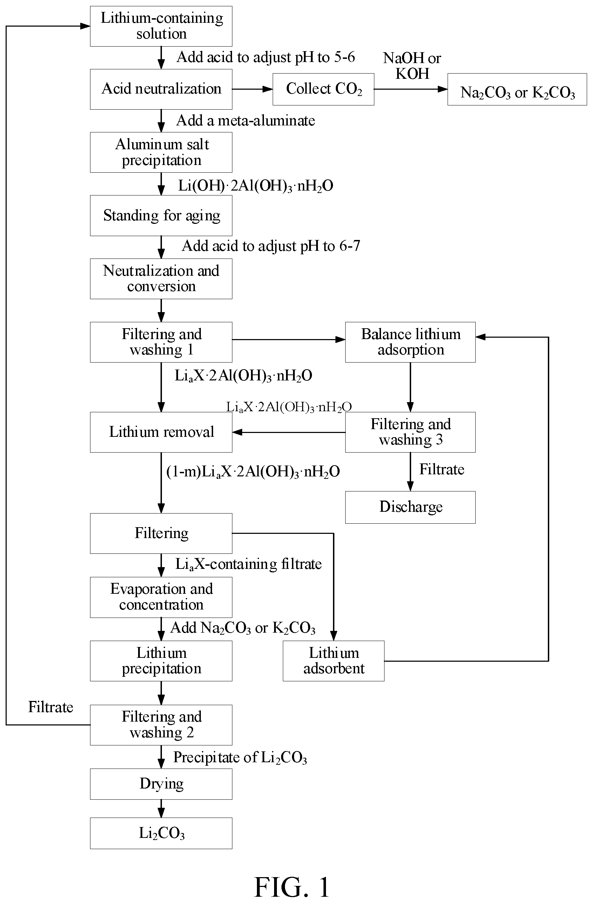

Referring to the process flowchart shown in FIG. 1, the recovery of lithium from a lithium-containing solution includes the following steps.
(1) Acid neutralization: a 10 wt% HCl solution was slowly added to a lithium-containing solution at a stirring rate of 300 rpm until the pH value was reduced to 6.0, and stirred for 0.5 h.
(2) Aluminum salt precipitation: a 5 wt% NaAlO₂ was prepared with pure water at a constant temperature of 60°C and a stirring rate of 300 rpm, and stirred for 30 min. A meta-aluminate solution with a flow rate of 500 mL/min was added to the lithium salt solution in a molar ratio of Li:Al of 1.1:2 by using a peristaltic pump at a stirring rate of 300 rpm and a constant temperature of 60°C. Flow rates of the lithium salt and the aluminum salt were determined according to concentrations of the lithium-containing solution and the meta-aluminate solution and the molar ratio of Li:Al. After the mixing was finished, stirring was further performed for 30 min to make reactants in the solution completely react.
(3) Standing for aging: the solution after the reaction was further aged at 25°C for 12 h, to obtain a precipitation solution containing a first precipitate of Li(OH)·2Al(OH)₃·nH₂O.
(4) Neutralization and conversion: a 10 wt% HCl solution was slowly added to the precipitation solution for neutralization at a stirring rate of 300 rpm, to obtain a precipitate of LiₐX·2Al(OH)₃·nH₂O. The pH value was monitored during the adding of the HCl solution , and the stirring was further performed for 30 min after the pH value was adjusted to 6.0.
(5) Filtering and washing 1: a precipitate was filtered out by using a vacuum filter with a 500-mesh filter cloth under a negative pressure of 0.04 MPa. The precipitate was spray-washed with pure water during the filtering with a ratio of a water spraying amount per unit time to a lithium adsorbent of 0.5 L/kg. A filtrate after the filtering and washing was filtered again by using a precision bag filter with a precision of 3 µm.
   Tiny particles collected were returned for aging, and a first filtrate was obtained.
(6) Desorption of lithium: the filtered and washed LiₐX·2Al(OH)₃·nH₂O was mixed with water in a mass ratio of 1:20 at a constant temperature of 40°C, and stirred at a rate of 300 rpm for 3 h. Filtering and washing were performed, to obtain a lithium adsorbent of (1-m)LiₐX·2Al(OH)₃·nH₂O (with a particle size D50 of 36.86 µm) and a LiₐX-containing filtrate. A mesh number of a filter medium was 500, and the negative pressure of a filter was 0.04 MPa. A filtrate after the filtering was filtered again by using a precision bag filter with a precision of 3 µm. Tiny particles collected were returned for aging.
(7) Lithium precipitation: the LiₐX-containing filtrate was evaporated and concentrated to a 22 g/L concentration of lithium in the filtrate. The evaporated and concentrated solution was heated to and kept at 90°C, and 10 wt% Na₂CO₃ was added at a stirring rate of 300 rpm, where the addition amount was 1.2 times a theoretical calculation amount. After the addition was finished, the stirring was further performed for 0.5 h, and standing was performed for 2 h.
(8) Filtering and washing 2: a precipitate of Li₂CO₃ was filtered out by using a vacuum filter with a 300-mesh filter medium under a negative pressure of 0.04 MPa. The precipitate was spray-washed with pure water during the filtering with a ratio of a water spraying amount per unit time to Li₂CO₃ of 0.5 L/kg.
(9) Drying: the precipitate was dried in a blast drying oven at 130°C for 120 min, to obtain a Li₂CO₃ product.

In addition, balance lithium adsorption was also included as follows: the lithium-desorbed precipitate (that is, the lithium adsorbent) in step (6) was added to the first filtrate containing balance lithium obtained in step (5) at a stirring rate of 300 rpm with a solid-liquid ratio of the lithium adsorbent to the first filtrate of 1:20 (that is, 1 kg of adsorbent was added per 20 L of filtrate), and stirred at a constant temperature of 40°C for 90 min.

Filtering and washing 3: a tail liquid after the balance lithium adsorption was filtered by using a vacuum filter with a 500-mesh filter medium under a negative pressure of 0.04 MPa. LiCl·2Al(OH)₃·nH₂O after the balance lithium adsorption was filtered out. The filter residue was spray-washed with pure water during the filtering with a ratio of a water spraying amount per unit time to the adsorbent of 0.5 L/Kg. The filter residue was lithium-desorbed. The filtrate was filtered again by using a precision bag filter with a precision of 3 µm, and the filter residue was returned for aging, and the filtrate was discharged. A second precipitate of LiₐX·2Al(OH)₃·nH₂O was obtained.

The second precipitate was mixed with water and stirred to undergo the desorption of lithium to obtain a second lithium adsorbent (1-m)LiₐX·2Al(OH)₃·nH₂O (with a particle size D50 of 36.86 µm) and a second LiₐX-containing filtrate (parameters in this process were the same as the parameters adopted for the desorption of lithium in step (6)).

The second LiₐX-containing filtrate was subjected to lithium precipitation, and filtered, washed, and dried to obtain Li₂CO₃ (parameters in this process were the same as the parameters adopted in step (7) lithium precipitation, step (8) filtering and washing 2, and step (9) drying).

### Example 2

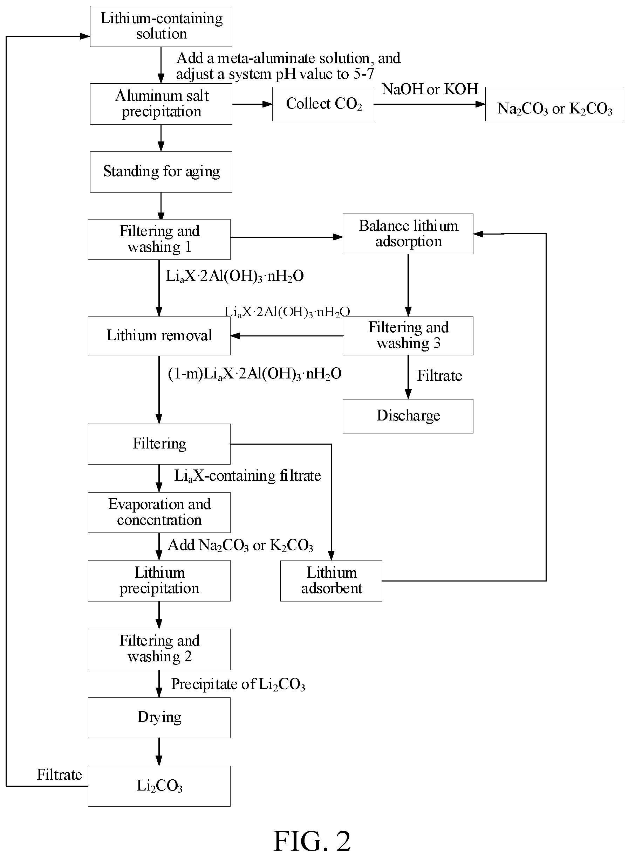

Referring to the process flowchart shown in FIG. 2, the recovery of lithium from a lithium-containing solution includes the following steps.
(1) Aluminum salt precipitation: a 5 wt% NaAlO₂ was prepared with pure water at a constant temperature of 60°C and a stirring rate of 300 rpm, and stirred for 30 min. A meta-aluminate solution with a flow rate of 500 mL/min was added to the lithium salt solution in a molar ratio of Li:Al of 1.1:2 by using a peristaltic pump at a stirring rate of 300 rpm and a constant temperature of 60°C. Flow rates of the lithium salt and the aluminum salt were determined according to concentrations of the lithium-containing solution and the meta-aluminate solution and the molar ratio of Li:Al. In addition, a 10 wt% HCl solution was slowly added to the lithium-containing solution until the pH value was reduced to 6.0, and stirred for 30 min, so that reactants in the solution completely react, to obtain a precipitate of LiₐX·2Al(OH)₃·nH₂O.

Subsequent operations of standing for aging, filtering and washing 1, balance lithium adsorption, desorption of lithium, lithium precipitation, filtering and washing 2, filtering and washing 3, and drying were all the same as those in Example 1. A lithium adsorbent (1-m)LiₐX·2Al(OH)₃·nH₂O with a D50 particle size of 40.11 µm was obtained.

### Example 3

The difference between Example 3 and Example 1 was that: in the process of aluminum salt precipitation in step (2), the molar ratio of Li:Al was 1.3:2. Other conditions and operations were all consistent with those of Example 1. A lithium adsorbent (1-m)LiₐX·2Al(OH)₃·nH₂O with a D50 particle size of 41.28 µm was obtained.

### Example 4

The difference between Example 4 and Example 1 was that: in the process of aluminum salt precipitation in step (2), the molar ratio of Li:Al was 1.2:2. Other conditions and operations were all consistent with those of Example 1. A lithium adsorbent (1-m)LiₐX·2Al(OH)₃·nH₂O with a D50 particle size of 38.19 µm was obtained.

### Example 5

The difference between Example 5 and Example 1 was that: in the process of desorption of lithium in step (6), the temperature was controlled to 20°C. Other conditions and operations were all consistent with those of Example 1. A lithium adsorbent (1-m)LiₐX·2Al(OH)₃·nH₂O with a D50 particle size of 43.87 µm was obtained.

### Example 6

The difference between Example 6 and Example 1 was that: in the process of desorption of lithium in step (6), the temperature was controlled to 60°C. Other conditions and operations were all consistent with those of Example 1. A lithium adsorbent (1-m)LiₐX·2Al(OH)₃·nH₂O with a D50 particle size of 40.41 µm was obtained.

### Example 7

The difference between Example 7 and Example 1 was that: in the process of lithium precipitation in step (7), the addition amount of Na₂CO₃ was 1.05 times the theoretical calculation amount. Other conditions and operations were all consistent with those of Example 1. A lithium adsorbent (1-m)LiₐX·2Al(OH)₃·nH₂O with a D50 particle size of 37.13 µm was obtained.

### Example 8

The difference between Example 8 and Example 1 was that: in the process of lithium precipitation in step (7), the addition amount of Na₂CO₃ was 1.3 times the theoretical calculation amount. Other conditions and operations were all consistent with those of Example 1. A lithium adsorbent (1-m)LiₐX·2Al(OH)₃·nH₂O with a D50 particle size of 39.51 µm was obtained.

### Example 9

In Example 9, compared with Example 1, the pressure of all vacuum filtering was adjusted to 0.06 MPa, and other conditions remained unchanged. A lithium adsorbent (1-m)LiₐX·2Al(OH)₃·nH₂O with a D50 particle size of 44.64 µm was obtained.

### Example 10

In Example 10, compared with Example 1, the steps of filtering again by using a precision bag filter in the filtering and washing 1, filtering again by using a precision bag filter in the desorption of lithium, and filtering again by using a precision bag filter in the filtering and washing 3 were omitted, and other conditions remained unchanged. A lithium adsorbent (1-m)LiₐX·2Al(OH)₃·nH₂O with a D50 particle size of 35.49 µm was obtained.

### Example 11

The difference between Example 11 and Example 1 was that: after the neutralization and conversion in step (4), the balance lithium remaining in the first filtrate was not adsorbed by using the lithium adsorbent, and the first filtrate was directly discharged after precise filtering.

The technical solution provided in the present disclosure was evaluated from the recovery rate of lithium, the purity of Li₂CO₃, the adsorption capacity of the lithium adsorbent, and the concentration of lithium in the discharged liquid. The recovery rate of lithium was determined based on the concentration of lithium (the concentration of Li⁺: 1.568 g/L) in the discharged liquid and the lithium-containing solution. The purity of Li₂CO₃ was determined by calculating the content of carbonate ion by potentiometric titration. The concentration of lithium in the discharged liquid was determined by using an inductively coupled plasma (ICP) spectrometer. Test results of the examples were recorded in Table 1.

The testing method for the adsorption capacity of the lithium adsorbent was as follows. A lithium-containing brine with a high magnesium-lithium ratio was used for testing, where a concentration of Li⁺ was 0.0233 wt%, a concentration of Mg²⁺ was 7.8540 wt%, and the mass ratio of Mg:Li in the brine was 337:1. 10 g of lithium adsorbent was weighted, and then was used for adsorption in a solid-liquid ratio of 1:50 at room temperature with a stirring rate of 300 rpm and an adsorption time of 90 min. The difference in the concentration of lithium in the brine before and after adsorption was the adsorption capacity of the lithium adsorbent.

**Table 1 Test results of examples and comparative examples**

| Experiment number | Recovery rate of lithium | Purity of Li₂CO₃ | Adsorption capacity (mg Li/g) | Concentration of Li⁺ in discharged liquid (mg/L) | D50 particle size of lithium adsorbent (µm) |
|---|---|---|---|---|---|
| Example 1 | 98.5% | 99.3% | 9.66 | 22.8 | 36.86 |
| Example 2 | 98.4% | 99.3% | 7.96 | 25.3 | 40.11 |
| Example 3 | 93.4% | 99.4% | 9.89 | 103.2 | 41.28 |
| Example 4 | 95.8% | 99.4% | 9.73 | 65.3 | 38.19 |
| Example 5 | 85.6% | 99.3% | 5.61 | 225.3 | 43.87 |
| Example 6 | 89.0% | 99.4% | 6.68 | 171.8 | 40.41 |
| Example 7 | 95.0% | 99.4% | 9.59 | 26.3 | 37.13 |
| Example 8 | 98.6% | 99.0% | 9.69 | 21.3 | 39.51 |
| Example 9 | 98.5% | 99.6% | 9.63 | 24.3 | 44.64 |
| Example 10 | 95.1% | 98.1% | 9.58 | 76.8 | 35.49 |
| Example 11 | 67.7% | 99.3% | 9.61 | 505.8 | 38.11 |

The test results of Examples 1-11 in Table 1 are analyzed by comparison in the following:
(1) It can be learned by comparing the test results of Examples 1 and 2 that: the adsorption capacity of the lithium adsorbent prepared in Example 2 is lower than that in Example 1. However, because the balance lithium content of the second filtrate in Example 2 is lower than that in Example 1, the final recovery rates of lithium in the foregoing two examples are not much different.
(2) It can be learned by comparing the test results of Examples 1, 3, and 4 that: in the step of aluminum salt precipitation, appropriately excessive lithium in the lithium-containing solution is beneficial for the meta-aluminate to completely react, and there is no aluminum remaining in the system after the reaction, thereby improving the purity of lithium carbonate.
(3) It can be learned by comparing the test results of Examples 1, 5, and 6 that: within the same period of time, a low desorption of lithium temperature leads to a small desorption of lithium amount, resulting in decreases in the recovery rate of lithium and in the adsorption capacity of the adsorbent; and a high desorption of lithium temperature leads to a large desorption of lithium amount and a high recovery rate of lithium.
(4) It can be learned by comparing the test results of Examples 1, 7, and 8 that: appropriately excessive sodium carbonate can ensure the degree of lithium ion involved in the reaction in the system, thereby increasing the recovery rate of lithium.
(5) It can be learned by comparing the test results of Examples 1 and 9 that: an increase in the negative pressure of the vacuum filtering can improve the purity of the Li₂CO₃ prepared.
(6) It can be learned by comparing the test results of Examples 1 and 10 that: the loss of tiny particles can be avoided by filtering again, which can further increase the recovery rate of lithium, and prevent the tiny particles from undergoing the step of lithium precipitation, resulting in a decrease in the purity of lithium carbonate.
(7) It can be learned by comparing the test results of Examples 1 and 11 that: in Example 1, compared with Example 11, the balance lithium remaining in the first filtrate undergoes adsorption, thereby significantly improving the recovery rate.

The foregoing descriptions are exemplary implementations of the present disclosure. It should be noted that, a person of ordinary skill in the art can further make several improvements and refinements without departing from the principle of the present disclosure, and the improvements and refinements shall fall within the protection scope of the present disclosure.

## Claims

1. A method for recovering lithium from a lithium-containing solution, comprising:
(1) precipitating lithium from the lithium-containing solution in step a) or b);
a) adjusting a pH value of the lithium-containing solution to 5-6, mixing the lithium-containing solution with a meta-aluminate solution, and standing for aging, to obtain a precipitation solution containing a first precipitate of Li(OH)·2Al(OH)₃·nH₂O; wherein n = 1-3; and
adjusting a pH value of the precipitation solution to 6-7, and performing filtering and washing, to obtain a precipitate of LiₐX·2Al(OH)₃·nH₂O and a first filtrate; or
b) mixing the lithium-containing solution with a meta-aluminate solution, adjusting a pH value of the mixed system to 5-7, then standing for aging, and performing filtering and precipitating, to obtain a precipitate of LiₐX·2Al(OH)₃·nH₂O and a first filtrate;
wherein X is an anion of an acid solution for adjusting the pH value, and a = 1 or 2;
(2) desorption of lithium: adding the precipitate of LiₐX·2Al(OH)₃·nH₂O to water and stirring for reaction, and filtering to obtain a lithium adsorbent of (1-m)LiₐX·2Al(OH)₃·nH₂O and a LiₐX-containing filtrate, wherein m = 0.1-0.9; and
(3) lithium precipitation: evaporating and concentrating the LiₐX-containing filtrate, adding a carbonate and stirring for reaction, and performing filtering and washing, to obtain a precipitate of Li₂CO₃.

2. The method of claim 1, further comprising:
adding the lithium adsorbent to the first filtrate, stirring at 20-60°C, to adsorb a lithium ion in the first filtrate, and performing filtering and washing, to obtain a second precipitate containing LiₐX·2Al(OH)₃·nH₂O; and
performing the desorption of lithium on the second precipitate to obtain a lithium-desorbed filtrate, and precipitating lithium from the lithium-desorbed filtrate.

3. The method of claim 2, wherein a solid-liquid ratio of the lithium adsorbent to the first filtrate is 1:(1-30) kg/L.

4. The method of claim 2 or 3, wherein the performing the desorption of lithium on the second precipitate comprises:
adding the second precipitate to water and stirring for reaction, and filtering to obtain a second lithium adsorbent of (1-m)LiₐX·2Al(OH)₃·nH₂O and a second LiₐX-containing filtrate.

5. The method of claim 4, further comprising: mixing the second LiₐX-containing filtrate and the LiₐX-containing filtrate, and performing the lithium precipitation in step (3) on the second LiₐX-containing filtrate and the LiₐX-containing filtrate that are mixed together.

6. The method of any one of claims 1 to 5, wherein the acid solution is one of sulfuric acid, hydrochloric acid, nitric acid or acetic acid.

7. The method of any one of claims 1 to 6, wherein a particle size D50 of the lithium adsorbent is 20 µm -100 µm.

8. The method of any one of claims 1 to 7, wherein in the desorption of lithium, the precipitate of LiₐX·2Al(OH)₃·nH₂O is mixed with water in a mass ratio of 1:(1-50), and stirred at 20°C -60°C for 1 h -24 h.

9. The method of any one of claims 1 to 8, wherein the LiₐX-containing filtrate is evaporated and concentrated until a concentration of lithium is 15 g/L-25 g/L.

10. The method of any one of claims 1 to 9, wherein in step (3), the carbonate is added to the LiₐX-containing filtrate at 50-90°C.

11. The method of any one of claims 1 to 10, wherein step (1) further comprises:
during adjusting the pH value, collecting carbon dioxide produced by the lithium-containing solution and injecting the same into an alkaline solution to obtain a carbonate, wherein the alkaline solution is NaOH or KOH, and the carbonate is Na₂CO₃ or K₂CO₃.

12. The method of any one of claims 1 to 11, wherein in step (1), the lithium-containing solution is mixed with the meta-aluminate solution in a molar ratio of Li:Al of (1.05-1.3):2.

13. The method of any one of claims 1 to 12, wherein in step (3), the molar ratio of lithium in the LiₐX-containing filtrate to a carbonate ion in the carbonate is (1.05-1.3):2.

14. The method of any one of claims 1 to 13, wherein in step (3), a second filtrate is also obtained in addition to the precipitate of Li₂CO₃, and the method further comprises: adding the second filtrate to the lithium-containing solution.

15. The method of any one of claims 1 to 14, wherein the filtering is performed under a negative pressure of 0.04 MPa-0.07 MPa, and a mesh number of a filter medium for the filtering is 300-5000.
